# EUROPEAN PATENT APPLICATION

(11) **EP 2 042 541 A1**
(43) Date of publication of application: **01.04.2009**
(21) Application number: 08252999.1
(22) Date of filing: 11.09.2008
(51) Int. Cl.: C08G 77/32, C08L 83/04, C04B 35/65

(54) **Method of Producing Metal-Ceramic Composite Material Having Metallic Luster**

(30) Priority: 12.09.2007 JP 2007237148
(71) Applicant: Shin-Etsu Chemical Co., Ltd., Tokyo 100-0004 (JP)
(72) Inventor: Aoki, Yoshitaka Silicone Denshi Zairyo Gijutsu Kenkyusho, Annaka-shi, Gunma-ken (JP)
(74) Representative: Hallybone, Huw George

(57) **Abstract**

A method of producing a metal-ceramic composite material having a metallic luster. This method involves subjecting a cured product obtained by curing a curable silicone composition containing a metal filler to heating under a non-oxidizing atmosphere, at a temperature that is within a range from 400 to 1,500°C and is less than the melting point of the metal filler. Using this method, a metal-ceramic composite material that has a shape and dimensions that meet the required specifications with a high degree of precision can be produced with comparative ease.

## Description

### BACKGROUND OF THE INVENTION

### 1. Field of the Invention

The present invention relates to a method of producing a metal-ceramic composite material having a metallic luster, and more specifically, relates to a method of producing a metal-ceramic composite material that exhibits excellent heat resistance and strength, and can be used favorably for aircraft members, spacecraft members, artificial satellite members, automobile members, and machine tools and the like.

### 2. Description of the Prior Art

In recent years, concerns over the conservation of resources have lead to demands for reductions in the weight of moving vehicles. As a result, the range of applications for lightweight metals such as aluminum and titanium, and fiber-reinforced composite materials that use carbon fiber as a reinforcing material has expanded considerably. A variety of properties are now being demanded of these materials, but significant problems still remain. For example, aluminum and fiber-reinforced composite materials may sometimes exhibit insufficient heat resistance, and therefore improvements in this property are currently being sought. Various techniques have been tested for improving the heat resistance. For example, in the case of fiber-reinforced composite materials, a technique for improving the heat resistance by cross-linking a silicone having a comparatively low polymerization degree by condensation polymerization has been proposed (see patent reference 1), but this technique still does not yield a satisfactory level of heat resistance. Furthermore, because of its high melting point, titanium suffers from poor workability, meaning it is often economically unviable.

In terms of a method of directly fabricating metal components, a method of molding a base metal using a polymer binder such as a nylon polymer and a low melting point metal is also known (see patent reference 2), but the processing is complex, making the method economically unviable.
[Patent Reference 1] US2005/0165154A1
[Patent Reference 2] WO 01/21347A1

### SUMMARY OF THE INVENTION

The present invention aims to address the above problems associated with the conventional technology, and has an object of providing a production method that enables a metal-ceramic composite material that exhibits metallic properties such as a metallic luster and has a shape and dimensions that meet the required specifications with a high degree of precision to be produced with comparative ease.

As a result of intensive investigations aimed at achieving the above object, the inventors of the present invention discovered that the object could be achieved by mineralization of a silicone composition containing a metal filler.

In other words, the present invention provides a method of producing a metal-ceramic composite material having a metallic luster, the method comprising subjecting a cured product obtained by curing a curable silicone composition containing a metal filler to heating under a non-oxidizing atmosphere, at a temperature that is within a range from 400 to 1,500°C and is less than the melting point of the metal filler.

According to the production method of the present invention, because almost no reduction in volume occurs during the process of heating the silicone cured product (namely, calcination), in those cases where, for example, the silicone cured product is a molded item having a specific shape and dimensions, those initial shape and dimensions can be retained. Accordingly, a metal-ceramic composite material having the desired shape and dimensions can be produced with comparative ease.

A composite material obtained using this method has metal-like properties such as a metallic luster and conductivity that are derived from the metal used.

### DETAILED DESCRIPTION OF THE PREFERRED EMBODIMENTS

A more detailed description of the present invention is presented below. In this description, the term "room temperature" refers to ambient temperature, which can typically change within a range from 10 to 35°C.

### - Curable Silicone Composition containing a Metal Filler -

There are no particular restrictions on the curing mechanism for the curable silicone composition containing a metal filler that is used as the starting material in the method of the present invention, and curable silicone compositions of any curing type can be used. Examples include addition-curable, ultraviolet-curable, electron beam-curable and condensation-curable silicone compositions.

### - Metal Filler

The curable silicone composition used in the present invention comprises a metal filler as an essential component. This metal filler must firstly have a melting point that is higher than the temperature of the heat treatment used for the mineralization process (namely, the temperature selected from within a range from 400 to 1,500°C).

The nature of the metal filler used may be selected in accordance with the objectives and intended applications for the obtained composite material. In those cases where weight reduction of the product is an objective, a metal filler with a light specific gravity is preferred, specific examples include metallic silicon, titanium, aluminum and magnesium, and of these, metallic silicon and titanium are particularly desirable. Furthermore, in those cases where imparting the resulting composite material with favorable conductivity is an objective, a metal filler having a high degree of conductivity is preferred, and specific examples include copper, silver and gold. In those cases where imparting the composite material with a high degree of hardness is an objective, titanium and molybdenum and the like are preferred, and titanium is particularly desirable. The metal filler is in a powdered form, and although there are no particular restrictions on the shape of the powder particles, the volumetric average particle size of the particles is typically within a range from 0.1 to 500 µm, and is preferably from 0.5 to 100 µm.

The metal filler is preferably added in a quantity that represents 20 to 80% by volume, and even more preferably 30 to 70% by volume, of the entire curable silicone composition, provided that the resulting composite material exhibits the desired metal-like properties, and when molded, the composition yields a molded item having stable mechanical strength and shape retention.

As mentioned above, there are no particular restrictions on the curable silicone composition provided it comprises a metal filler described above, but of the various possible types of composition, addition-curable silicone compositions and condensation-curable silicone compositions are preferred. These compositions are described below.

### - Addition-curable Silicone Composition

An example of an addition-curable silicone composition is a liquid addition-curable silicone composition comprising:
(a) an organopolysiloxane containing alkenyl groups, in which the molar ratio of alkenyl groups relative to all the silicon atoms within the molecule is within a range from 0.3 to 2.0,
(b) an organohydrogenpolysiloxane containing hydrogen atoms bonded to silicon atoms, in which the molar ratio of hydrogen atoms relative to all the silicon atoms within the molecule is within a range from 0.3 to 2.0,
(c) a platinum group metal-based catalyst, and
(d) a metal filler.

Each of these components is described below.

### -- Component (a): Alkenyl group-containing organopolysiloxane

The organopolysiloxane of component (a) is the base polymer of the addition-curable silicone composition, and has a molar ratio of silicon atom-bonded alkenyl groups relative to silicon atoms that is within a range from 0.3 to 2.0, is preferably at least 0.3 and less than 2.0, is even more preferably within a range from 0.5 to 1.5, and is most preferably from 0.7 to 1.0. If this molar ratio is less than 0.3, then the mechanical strength following calcination under a non-oxidizing atmosphere tends to deteriorate, whereas if the molar ratio exceeds 2.0, then production of the organopolysiloxane becomes difficult, the versatility diminishes, and the composition becomes economically unviable. Conventional organopolysiloxanes can be used as the component (a). The weight average molecular weight of the organopolysiloxane of the component (a), measured by gel permeation chromatography (hereafter abbreviated as "GPC") and referenced against polystyrene standards, is preferably within a range from approximately 300 to 10,000. Moreover, the viscosity at 25°C of the organopolysiloxane of the component (a) is preferably within a range from 1 to 10,000 mPa·s, and is even more preferably from approximately 10 to 3,000 mPa·s. Provided the viscosity is within this range, mixing with the metal filler is relatively simple, and the handling properties are also favorable. From the viewpoint of availability of the raw materials, the organopolysiloxane of the component (a) is basically either a straight-chain structure containing no branching in which the molecular chain (the main chain) is composed of repeating diorganosiloxane units (R¹₂SiO_{2/2} units) and both molecular chain terminals are blocked with triorganosiloxy groups (R¹₃SiO_{1/2} units), or a structure in which the molecular chain is composed of repeating diorganosiloxane units that include cyclic structures containing no branching, but may also partially include branched structures such as trifunctional siloxane units (R¹SiO_{3/2} units) or SiO_{4/2} units. (In the above formulas, R¹ represents identical or different, unsubstituted or substituted monovalent hydrocarbon groups, preferably containing from 1 to 10 carbon atoms, and even more preferably 1 to 8 carbon atoms.)

Examples of the component (a) include organopolysiloxanes represented by an average composition formula (1) shown below:

R¹ₐSiO_{(4-a)/2} (1)

(wherein, R¹ is as defined above, and a is a number that is preferably within a range from 1.5 to 2.8, even more preferably from 1.8 to 2.5, and most preferably from 1.95 to 2.05),
wherein the compound contains alkenyl groups, and the molar ratio of those alkenyl groups relative to all the silicon atoms within the molecule is within a range from 0.3 to 2.0.

Examples of the monovalent hydrocarbon group represented by R¹ include alkyl groups such as a methyl group, ethyl group, propyl group, isopropyl group, butyl group, isobutyl group, tert-butyl group, pentyl group, neopentyl group, hexyl group, octyl group, nonyl group or decyl group; aryl groups such as a phenyl group, tolyl group, xylyl group or naphthyl group; cycloalkyl groups such as a cyclopentyl group or cyclohexyl group; alkenyl groups such as a vinyl group, allyl group, propenyl group, isopropenyl group, butenyl group, hexenyl group or octenyl group; cycloalkenyl groups such as a cyclohexenyl group; and groups in which a portion of, or all of, the hydrogen atoms within one of the above hydrocarbon groups have been substituted with a halogen atom such as a fluorine atom, bromine atom or chlorine atom, or with a cyano group or the like, such as a chloromethyl group, chloropropyl group, bromoethyl group, trifluoropropyl group or cyanoethyl group.

In the average composition formula (1), at least two of the R¹ groups are alkenyl groups (and preferably alkenyl groups of 2 to 8 carbon atoms, and even more preferably 2 to 6 carbon atoms). The alkenyl group content, reported as the molar ratio of alkenyl groups relative to silicon atoms, is typically within a range from 0.3 to 2.0, is preferably at least 0.3 and less than 2.0, is even more preferably within a range from 0.5 to 1.5, and is most preferably from 0.7 to 1.0. In those cases where the organopolysiloxane of the component (a) has a straight-chain structure, the alkenyl groups may be bonded solely to silicon atoms at the molecular chain terminals, solely to silicon atoms at non-terminal positions within the molecular chain, or may also be bonded to both these types of silicon atoms. In terms of achieving a favorable curing rate for the composition and superior properties for the cured product, at least one alkenyl group is preferably bonded to a silicon atom at a molecular chain terminal. If the molar ratio of alkenyl groups relative to silicon atoms is less than 0.3, then the strength of the composite material obtained upon calcination of the composition under a non-oxidizing atmosphere tends to be insufficient, whereas if the molar ratio exceeds 2.0, the compound becomes uneconomic, and is also difficult to produce.

Basically, the R¹ groups may be any of the groups listed above, but the alkenyl groups are preferably vinyl groups, and the monovalent hydrocarbon groups other than the alkenyl groups are preferably methyl groups or phenyl groups.

Specific examples of the component (a) include compounds represented by the general formulas shown below.

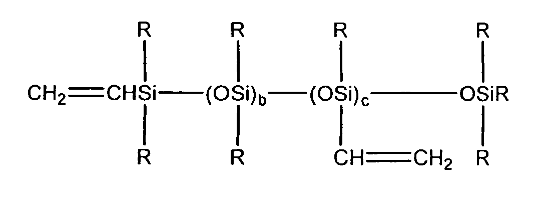

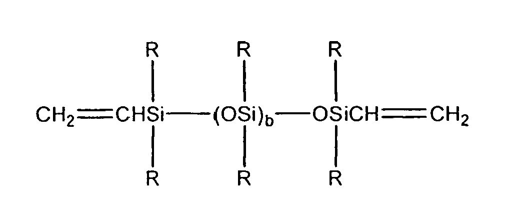

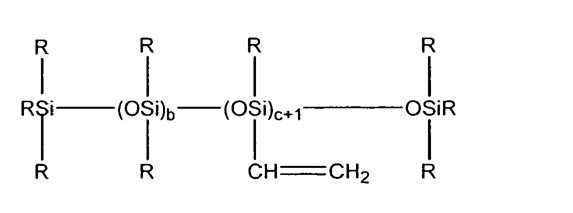

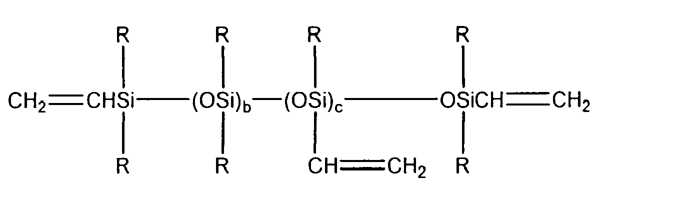

In the above general formulas, R has the same meaning as R¹ with the exception of not including alkenyl groups. b and c are integers that satisfy b ≥ 0 and c ≥ 1 respectively, provided that b+c is a number that yields a molecular weight and a viscosity for the organopolysiloxane that fall within the ranges specified above (namely, from 300 to 10,000, and from 1 to 10,000 mPa·s and preferably from 10 to 3,000 mPa·s respectively).

### -- Component (b): Organohydrogenpolysiloxane

The organohydrogenpolysiloxane of the component (b) comprises sufficient hydrogen atoms that the molar ratio of silicon atom-bonded hydrogen atoms (namely, SiH groups) relative to silicon atoms is within a range from 0.3 to 2.0, is preferably at least 0.3 and less than 2.0, is even more preferably within a range from 0.5 to 1.5, and is most preferably from 0.7 to 1.0. If this molar ratio is less than 0.3, then the mechanical strength following calcination of the composition under a non-oxidizing atmosphere tends to deteriorate, whereas if the molar ratio exceeds 2.0, then production of the organohydrogenpolysiloxane becomes difficult, the versatility diminishes, and the composition becomes economically unviable. The component (b) reacts with the component (a) and functions as a cross-linking agent. There are no particular restrictions on the molecular structure of the component (b), and conventionally produced chain-like, cyclic, branched, or three dimensional network (resin-like) organohydrogenpolysiloxanes can be used. If the component (b) has a chain-like structure, then the SiH groups may be bonded solely to silicon atoms at the molecular chain terminals, solely to silicon atoms at non-terminal positions within the molecular chain, or may also be bonded to both these types of silicon atoms. Furthermore, the number of silicon atoms within a single molecule (namely, the polymerization degree) is typically within a range from 2 to 300 and is preferably from 4 to 150, and an organohydrogenpolysiloxane that is liquid at room temperature (25°C) is particularly favorable as the component (b).

Examples of the component (b) include organohydrogenpolysiloxanes represented by an average composition formula (2) shown below.

R²_{d}HₑSiO_{(4-d-e)/2} (2)

(wherein, R² represents identical or different, unsubstituted or substituted monovalent hydrocarbon groups, preferably containing from 1 to 10 carbon atoms, and even more preferably from 1 to 8 carbon atoms, d and e represent numbers that preferably satisfy 0.7 ≤ d ≤ 2.1, 0.001 ≤ e ≤ 1.0 and 0.8 ≤ d+e ≤ 3.0, and even more preferably satisfy 1.0 ≤ d ≤ 2.0, 0.01 ≤ e ≤ 1.0 and 1.5 ≤ d+e ≤ 2.5)

Examples of R² include the same groups as those described above for R¹ within the above average composition formula (1) (but excluding alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with dimethylhydrogensiloxy groups, copolymers of methylhydrogensiloxane and dimethylsiloxane with both terminals blocked with dimethylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with dimethylhydrogensiloxy groups, copolymers of methylhydrogensiloxane, methylphenylsiloxane and dimethylsiloxane with both terminals blocked with dimethylhydrogensiloxy groups, copolymers composed of (CH₃)₂HSiO_{1/2} units, (CH₃)₂SiO_{2/2} units and SiO_{4/2} units, copolymers composed of (CH₃)₂HSiO)_{1/2} units and SiO_{4/2} units, and copolymers composed of (CH₃)₂HSiO)_{1/2} units, SiO_{4/2} units, and (C₆H₅)₃SiO)_{1/2} units.

The quantity added of the component (b) must be sufficient that the quantity of SiH groups within this component (b), relative to each 1 mol of silicon atom-bonded alkenyl groups within the component (a), is within a range from 0.1 to 5.0 mols, preferably from 0.5 to 3.0 mols, and even more preferably from 0.8 to 2.0 mols. Provided the quantity added of the component (b) yields a quantity of SiH groups within the above range, the curing of the curable silicone composition is more likely to proceed satisfactorily. Furthermore, foaming problems caused by a dehydrogenation reaction within the cured product of the silicone composition are less likely, meaning superior levels of strength and heat resistance tend to be achieved for the resulting metal molded item obtained following calcination under a non-oxidizing atmosphere.

### -- Component (c): Platinum group metal-based catalyst

The platinum group metal-based catalyst of the component (c) is used as a catalyst for accelerating the addition curing reaction (the hydrosilylation reaction) between the component (a) and the component (b). Conventional platinum group metal-based catalysts can be used as the component (c), although the use of platinum or a platinum compound is preferred. Specific examples of the component (c) include platinum black, platinic chloride, chloroplatinic acid, alcohol-modified products of chloroplatinic acid, complexes of chloroplatinic acid with olefins, aldehydes, vinylsiloxanes or acetylene alcohols, and complexes of platinum and vinylsiloxanes, although other conventional platinum group metal-based catalysts that are used for addition curing reactions (hydrosilylation reactions) can also be used.

The quantity added of the component (c) need only be an effective catalytic quantity, may be suitably increased or decreased in accordance with the desired curing rate, and preferably yields an equivalent mass of the platinum group metal relative to the mass of the component (a) that is within a range from 0.1 to 1,000 ppm, and even more preferably from 1 to 200 ppm.

### -- Component (d): Metal filler

The metal filler of the component (d) is as described above, and is preferably added in a quantity that represents 20 to 80% by volume, and even more preferably 30 to 70% by volume, of the entire curable silicone composition.

### -- Composition curing

Curing of the addition-curable silicone composition can be conducted using conventional methods. In other words, the composition is usually first molded into the desired shape, and curing is then performed either by leaving the composition to stand at room temperature for a long period, or by subjecting the composition to heating, thereby causing a hydrosilylation reaction to proceed within the composition.

There are no particular restrictions on the molding method used for molding the composition, and cast molding, injection molding or extrusion molding or the like may be used. In the case of cast molding, the composition must be a liquid at room temperature, and more specifically, should have a viscosity within a range from 1 to 100,000 mPa·s, and preferably from 10 to 30,000 mPa·s.

Because the curing rate varies depending on the makeup of the composition, and particularly the quantity of the metal filler, conditions such as the heating temperature may be selected appropriately in accordance with the metal filler quantity. The heating temperature is typically within a range from room temperature to 300°C, and a temperature within a range from 50 to 200°C is often satisfactory. The curing time may be set as desired within a range from 1 minute to 3 hours, and is preferably from 3 minutes to 2 hours. Furthermore, secondary curing may be conducted if required, and if conducted, the temperature conditions for the secondary curing are typically 120°C or higher, and are frequently within a range from 150 to 250°C. The secondary curing time is typically within a range from 10 minutes to 48 hours, and a time of 30 minutes to 24 hours is often satisfactory.

### - Condensation-curable Silicone Composition

An example of a condensation-curable silicone composition is a composition comprising:
(α) a silicone resin represented by an average composition formula (3) shown below:

   R³ₘR⁴ₙ(OR⁵)ₚ(OH)_{q}SiO_{(4-m-n-p-q)/2} (3)

   (wherein, each R³ represents, independently, a hydrogen atom or a monovalent hydrocarbon group other than an aryl group that includes or does not include a carbonyl group, R⁴ represents a phenyl group, R⁵ represents a monovalent hydrocarbon group of 1 to 4 carbon atoms, m represents a number that satisfies: 0.1 ≤ m ≤ 2, n represents a number that satisfies: 0 ≤ n ≤ 2, p represents a number that satisfies: 0 ≤ p ≤ 1.5, and q represents a number that satisfies: 0 ≤ q ≤ 0.35, provided that the value of m+n+p+q satisfies: 0.1 ≤ m+n+p+q ≤ 2.6),
(β) a metal filler,
(γ) optionally, a hydrolyzable silane and/or partial hydrolysis-condensation product thereof, and
(δ) optionally, a condensation reaction catalyst.

### -- Component (α): Silicone resin

The silicone resin used as the component (α) is a silicone resin represented by the above average composition formula (3). Here, the term "silicone resin" refers to an organopolysiloxane that adopts a three dimensional structure as a result of containing T units (trifunctional siloxane units) and/or Q units (tetrafunctional siloxane units). In some cases, the silicone resin may also include M units (monofunctional siloxane units) and/or D units (difunctional siloxane units).

The silicone resin used as the component (α) is preferably a solid, at least at temperatures of room temperature or lower, and particularly at temperatures of 25°C or lower, and has a softening point that is preferably 40°C or higher, and even more preferably within a range from 40 to 100°C.

Next is a description of the above average composition formula (3) that represents the component (α).

In the formula (3), each of the R³ groups preferably represents, independently, either a hydrogen atom, or a monovalent hydrocarbon group other than an aryl group that contains from 1 to 8 carbon atoms and may include a carbonyl group. Specific examples of R³ include a hydrogen atom; alkyl groups such as a methyl group, ethyl group, propyl group, butyl group, pentyl group or hexyl group; cycloalkyl groups such as a cyclopentyl group or cyclohexyl group; alkenyl groups such as a vinyl group, allyl group, propenyl group, isopropenyl group or butenyl group; and acyl groups such as an acryloyl group or methacryloyl group. From the viewpoint of ease of availability of the raw materials, R³ is preferably a hydrogen atom, methyl group, ethyl group or vinyl group. In those cases where R³ is a hydrogen atom, the reactive SiH groups that exist within the silicone resin improve the reactivity with the oxide coating that typically covers the surface of the metal filler particles..

The aforementioned m is a number that satisfies: 0.1 ≤ m ≤ 2, the upper limit for m is preferably 1.5 or lower, and the lower limit for m is preferably at least 0.1, and even more preferably 0.5 or higher. Provided the value of m falls within this range, the fluidity of the silicone resin is more readily reduced, meaning a uniform mixture with the metal filler can be more readily achieved at a comparatively low temperature. Furthermore, because any reduction in the weight of the mineralized product obtained by conducting a heat treatment following curing can be more readily suppressed, resources can be better conserved, which is also economically more advantageous.

The aforementioned R⁴ group is a phenyl group, and is useful in improving the wettability relative to the metal filler.

The aforementioned n is a number that satisfies: 0 ≤ n ≤ 2, the upper limit for n is preferably 1.5 or lower, and the lower limit for n is preferably at least 0.05, and even more preferably 0.1 or higher. Provided the value of n falls within this range, the phenyl group content is not too high, and because any reduction in the weight of the mineralized product obtained by conducting a heat treatment following curing can be more readily suppressed, resources can be better conserved, which is also economically more advantageous.

Specific examples of R⁵ include alkyl groups of 1 to 4 carbon atoms such as a methyl group, ethyl group, propyl group, isopropyl group, butyl group or isobutyl group, and a methyl group is particularly preferred industrially. If the number of carbon atoms within R⁵ exceeds 4, then the reactivity of the group represented by OR⁵ becomes overly poor, which may result in deformation in the shape of the mineralized product during the heat treatment conducted following curing.

The aforementioned p is a number that satisfies: 0 ≤ p ≤ 1.5, the upper limit for p is preferably 1.2 or lower, and the lower limit for p is preferably at least 0.05 and even more preferably 0.1 or higher. Provided the value of p falls within this range, the quantity within the silicone resin of the group represented by OR⁵ is not too high, and the molecular weight of the silicone resin can be maintained at a high value, meaning any loss of carbon or silicon from the material as a result of elimination and gasification during the heat treatment conducted following curing can be suppressed to low levels.

The aforementioned q is a number that satisfies: 0 ≤ q ≤ 0.35, and is preferably a number that satisfies: 0 ≤ q ≤ 0.3, and is most preferably 0. The value of q represents the small quantity of residual silanol groups retained within the silicone resin during production. Provided the value of q falls within the above range, the reactivity of the silanol groups can be suppressed for the silicone resin as a whole, and both the storage stability and workability of the silicone resin can be more readily improved.

The value of m+n+p+q is a number that satisfies: 0.1 ≤ m+n+p+q ≤ 2.6. A value of m+n+p+q within this range has the effect of enabling more ready suppression of any loss of carbon or silicon from the material as a result of elimination and gasification during the heat treatment conducted following curing.

There are no particular restrictions on the molecular weight of the silicone resin, provided it is sufficient to enable ready suppression of any loss of carbon or silicon from the material as a result of elimination and gasification during the heat treatment conducted following curing. For example, the weight average molecular weight of the silicone resin, measured using gel permeation chromatography (hereafter abbreviated as "GPC") and referenced against polystyrene standards, is preferably at least 600, and is even more preferably within a range from 1,000 to 10,000.

There are no particular restrictions on the silicone resin provided it satisfies the conditions described above. The silicone resin may be either a single resin, or a combination of two or more resins with different molecular structures or different proportions of the various siloxane units.

These types of silicone resins can be produced by conventional methods. For example, the target silicone resin can be produced by conducting a cohydrolysis, if required in the presence of an alcohol of 1 to 4 carbon atoms, of the organochlorosilanes that correspond with the siloxane units incorporated within the structure of the target resin, using a ratio between the organochlorosilanes that reflects the ratio between the corresponding siloxane units, while removing the by-product hydrochloric acid and low boiling point components. Furthermore, in those cases where alkoxysilanes, silicone oils or cyclic siloxanes are used as starting raw materials, the target silicone resin can be obtained by using an acid catalyst such as hydrochloric acid, sulfuric acid or methanesulfonic acid, adding water to effect the hydrolysis if required, and following completion of the polymerization reaction, removing the acid catalyst and low boiling point components.

### -- Component (β): Metal filler

The metal filler used as the component (β) is as described above, and is preferably added in a quantity that represents 20 to 80% by volume of the entire curable composition.

### -- Component (γ): Hydrolyzable silane and/or partial hydrolysis-condensation product thereof

A hydrolyzable silane and/or partial hydrolysis-condensation product thereof that functions as the component (γ) acts as a curing agent, but is an optional component that need not necessarily be used. Examples of compounds that can be used favorably as the component (γ) include silanes containing at least three silicon atom-bonded hydrolyzable groups within each molecule, and partial hydrolysis-condensation products thereof (namely, organopolysiloxanes in which at least one, and preferably two or more, of the hydrolyzable groups remain within the molecule).

Examples of compounds that can be used favorably as the above hydrolyzable silane include compounds represented by a formula (4) shown below:

R⁶_{f}SiX_{4-f} (4)

(wherein, R⁶ represents an unsubstituted or substituted monovalent hydrocarbon group, X represents a hydrolyzable group, and f represents either 0 or 1).

Preferred examples of R⁶ include alkyl groups such as a methyl group or ethyl group; alkenyl groups such as a vinyl group, allyl group or propenyl group; and aryl groups such as a phenyl group.

Specific examples of the hydrolyzable silane include methyltriethoxysilane, vinyltriethoxysilane, vinyltriacetoxysilane, ethyl orthosilicate, and partial hydrolysis-condensation products of these compounds. These compounds may be used either alone, or in combinations of two or more different compounds.

In those cases where a hydrolyzable silane and/or partial hydrolysis-condensation product thereof of the component (γ) is used, the quantity added is preferably within a range from 0.01 to 20 parts by mass, and even more preferably from 0.1 to 10 parts by mass, per 100 parts by mass of the silicone resin of the component (α). In those cases where a component (γ) is used, using a quantity within the above range ensures that the storage stability, adhesion and curing rate of the composition of the present invention are particularly favorable.

### -- Component (δ): Condensation reaction catalyst

The condensation reaction catalyst of the component (δ) is an optional component, and need not necessarily be added. In those cases where the above hydrolyzable silane and/or partial hydrolysis-condensation product thereof of the component (γ) contains aminoxy groups, amino groups or ketoxime groups or the like, the component (δ) need not be used. Examples of the condensation reaction catalyst of the component (δ) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; amine compounds or the salts thereof such as hexylamine and dodecylamine phosphate; quaternary ammonium salts such as benzyltriethylammonium acetate; lower fatty acid salts of alkali metals such as potassium acetate; dialkylhydroxylamines such as dimethylhydroxylamine and diethylhydroxylamine; and guanidyl group-containing organosilicon compounds. These catalysts may be used either alone, or in combinations of two or more different catalysts.

In those cases where a condensation reaction catalyst of the component (δ) is used, although there are no particular restrictions on the quantity added, the quantity is preferably within a range from 0.01 to 20 parts by mass, and even more preferably from 0.1 to 10 parts by mass, per 100 parts by mass of the component (α). If the component (δ) is used, then provided the quantity falls within the above range, the curability and storage stability of the composition of the present invention are particularly favorable.

In the condensation-curable silicone composition described above, the quantities of the component (γ) and the component (δ) are preferably kept as small as possible, and not using these components is particularly desirable. In other words, a preferred condensation-curable silicone composition is composed essentially of only the component (α) and the component (β), as such compositions exhibit more favorable retention of the shape and dimensions of the molded product over the course of the heat treatment. Here the expression "composed essentially of only the component (α) and the component (β)" means that the incorporation of very small quantities of unavoidable third components is permissible, but incorporation of significant quantities of these third components is excluded.

### -- Composition preparation

In order to prepare a condensation-curable silicone composition described above, the silicone resin of the component (α) that functions as the base polymer may first be heated to form a solventless liquid state, or converted to a water-based emulsion system, or diluted with an organic solvent such as toluene or tetrahydrofuran to form a solution, and the metal filler of the component (β), and if required the component (γ) and/or the component (δ), may then be mixed with the liquid, the emulsion, or the solution.

In the case of a solventless state, heating is preferably conducted so as to achieve a viscosity within a range from 1 to 50,000 mPa·s, and preferably from 10 to 10,000 mPa·s, whereas in the case of a water-based emulsion system or a solution in which the base polymer has been diluted with an organic solvent such as toluene or tetrahydrofuran, the viscosity at 25°C is typically adjusted to a value within a range from 1 to 50,000 mPa·s, and preferably from 10 to 10,000 mPa·s. The metal filler is preferably added once the desired viscosity has been achieved.

### -- Composition curing

In order to mold and cure the condensation-curable silicone composition, the composition is usually molded to the desired shape and subsequently left to stand within an atmosphere that contains moisture (for example, a humidity within a range from 25 to 90% RH, and preferably from 50 to 85% RH), allowing curing to proceed under the action of the moisture within the atmosphere. There are no particular restrictions on the method used for molding the composition to the desired shape, and any conventional molding method may be used. Heating at a temperature of 300°C or lower may be used to accelerate the curing. Furthermore, secondary curing may also be conducted if required, and the temperature conditions during such secondary curing are preferably at least 120°C, and even more preferably within a range from 150 to 250°C. The secondary curing time is preferably within a range from 10 minutes to 48 hours, and is even more preferably from 30 minutes to 24 hours.

In those cases where the silicone composition is composed of the component (α) and the component (β), and contains no condensation catalysts, heat treatment is conducted following mold curing. For example, the composition may be poured into a molding die such as a metal mold having a desired shape, and subsequently subjected to a heat treatment. This causes the condensation reaction to proceed within the composition, thereby curing the composition. The curing rate varies depending on the quantity of the silicone resin within the composition, and the temperature conditions during curing may be selected appropriately in accordance with the quantity of the silicone resin. The heating temperature is typically within a range from 100 to 300°C, and is preferably from 150 to 200°C. The curing time may be set as desired within a range from 1 minute to 3 hours, and is preferably from 3 minutes to 2 hours. Furthermore, secondary curing may be conducted if required, and the conditions for such secondary curing are as described above.

Depending on the nature of the molding die, the heat treatment may be conducted following removal of the product from the mold, although in the case of a sand mold, the heat treatment is conducted without removing the product from the mold.

### - Mineralization of the Silicone Cured Product -

The cured molded product of the curable silicone composition is subsequently subjected to a heat treatment in a non-oxidizing atmosphere, thereby causing mineralization of the silicone.

This heat treatment is conducted under a non-oxidizing atmosphere, and preferably under an inert gas atmosphere. Examples of the inert gas include nitrogen gas, argon gas and helium gas, although from a practical perspective, nitrogen gas is preferred.

The heat treatment is conducted at a temperature within a range from 400 to 1,500°C. This heating temperature is preferably 600°C or higher, and is most preferably 800°C or higher. Furthermore, the heating temperature is preferably not more than 1,300°C, and even more preferably 1,100°C or lower. In other words, the heating temperature is preferably within a range from 600 to 1,300°C, and is even more preferably from 800 to 1,100°C. This heat treatment causes cleavage of carbon-hydrogen bonds within the silicone and elimination of hydrogen from within the material, but the mineralization proceeds without elimination of silicon and carbon. If the heating temperature is less than 400°C, then cleavage of carbon-hydrogen bonds within the silicone may not proceed satisfactorily, whereas if the heating temperature exceeds 1,500°C, then the elimination of carbon and silicon from the material can no longer be ignored, retention of the shape and dimensions of the molded material tends to deteriorate, and the process is also undesirable from the perspective of conserving resources.

The temperature of this heat treatment must also be set to a temperature less than the melting point of the metal filler that is used. If the heat treatment is conducted at a temperature equal to or greater than the melting point of the metal filler, then the metal filler is eluted from the composition, and if the silicone composition has been molded into a specific shape, then retaining the shape and dimensions of the molded item is difficult.

The end point of the heat treatment can be specified, for example, as the point where heating the product at 600°C for one hour causes a weight reduction of less than 1% by weight.

With a metal-ceramic composite material obtained via the above type of heat treatment, a polished surface of the material exhibits a metallic luster, and the material also exhibits metal-like properties such as semiconductivity or conductivity. For example, if a metallic silicon filler is used as the metal filler, then the composite material becomes a semiconductor, whereas if a metal such as gold, silver or copper is used, the composite material exhibits conductivity. The electrical conductivity of the composite material differs depending on the nature and blend quantity of the metal filler used. Based on these observations, it is believed that within the composite material, individual particles of the metal filler do not exist in an independently dispersed state, but are rather fused together.

The heat treatment is typically conducted following removal of the silicone cured product from the mold in the case of a molding die such as a metal mold, but is conducted prior to mold removal in the case of a sand mold.

### EXAMPLES

A more detailed description of the present invention is presented below based on a series of examples, although the present invention is in no way limited by the examples described below. In the examples, molecular weight values are weight average molecular weight values measured using GPC and referenced against polystyrene standards. Furthermore, "Me" represents a methyl group, "i-Pr" represents an isopropyl group, and "Ph" represents a phenyl group. The average particle size values for the metal fillers are measured on a volume basis.

### [Example 1]

The compounds (A) and (B) shown below were used as silicone components, the complex (C) described below was used as a platinum group metal-based catalyst, and the material (D) was used as the metal filler. The quantity of each component is also shown below.
(A) 55 parts by mass of a diorganopolysiloxane containing vinyl groups within each molecule and represented by an average composition formula shown below: 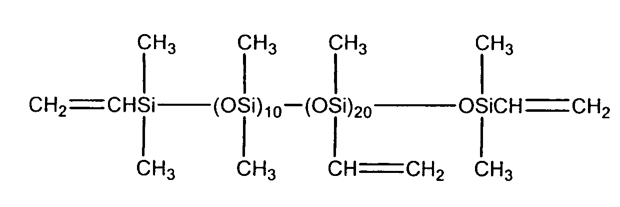 (wherein, the molar ratio of alkenyl groups relative to all the silicon atoms within the molecule is 0.688),
(B) 45 parts by mass of a diorganopolysiloxane containing hydrogen atoms bonded to silicon atoms and represented by an average composition formula shown below: 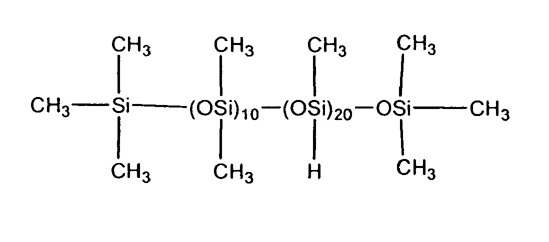 (wherein, the molar ratio of SiH groups relative to all the silicon atoms within the molecule is 0.625),
(C) a toluene solution of a platinum-divinyltetramethyldisiloxane complex (platinum element content: 0.5% by mass), in a quantity equivalent to 0.15% by mass relative to the combined mass of the component (A) and the component (B), and
(D) 234 parts by mass of a metallic silicon filler (melting point: 1410°C, average particle size: 10 µm) (namely, the quantity of the metallic silicon filler is equivalent to 50% by volume of the entire silicone composition).

The above components (A), (B) and (D) were placed in a planetary mixer (a registered trademark for a mixing device manufactured by Inoue Manufacturing Co., Ltd.), and were stirred for one hour at room temperature. Subsequently, the component (C) was added to the planetary mixer and stirring was continued for a further 30 minutes at room temperature, thus yielding a curable silicone composition with a viscosity at room temperature of 3,000 mPa·s.

Using a metal mold in which was formed a substantially circular annular channel having a depth of 100 mm, wherein the outer diameter of the channel was 20 mm and the width of the channel was 1.0 mm, the above curable silicone composition was poured into the channel, and was then cured by heating at 80°C for one hour.

Following removal from the mold, the obtained silicone cured product was placed in an alumina boat that was subsequently placed inside an atmosphere furnace under an atmosphere of nitrogen gas, and the temperature was raised to 1,000°C over a ten-hour period at a rate of temperature increase of 100°C/hour. The temperature was then held at 1,000°C for one hour, and then cooled to room temperature. In this manner, a black circular cylindrical inorganic molded item having an outer diameter of 18 mm, a height of 91 mm, and a wall thickness of 0.9 mm was obtained. The mass loss during the heat treatment was 6.0%. Polishing a surface of the inorganic molded item with a polishing device revealed a gray-colored metallic luster, and measurement of the specific gravity revealed a value of 1.9.

### [Example 2]

With the exception of replacing the metallic silicon filler used in Example 1 with 453 parts by mass of a titanium filler (melting point: 1660°C, average particle size: 10 µm), equivalent to 50% by volume of the entire silicone composition, a heat treatment was conducted in the same manner as Example 1, yielding a circular cylindrically shaped black inorganic molded item having an outer diameter of 18 mm, a height of 90 mm, and a wall thickness of 0.9 mm. The mass loss during the heat treatment was 3.0%. Polishing a surface of the inorganic molded item with a polishing device revealed a silver-colored metallic luster, and measurement of the specific gravity revealed a value of 3.6.

### [Example 3]

With the exception of replacing the metallic silicon filler used in Example 1 with 899 parts by mass of a copper filler (melting point: 1083°C, average particle size: 10 µm), equivalent to 50% by volume of the entire silicone composition, a heat treatment was conducted in the same manner as Example 1, yielding a circular cylindrically shaped black inorganic molded item having an outer diameter of 18 mm, a height of 90 mm, and a wall thickness of 0.9 mm. The mass loss during the heat treatment was 2.0%. Polishing a surface of the inorganic molded item with a polishing device revealed a copper-colored metallic luster. Measurement of the electrical resistance of this cylinder having a copper-colored metallic luster revealed a resistance of 0 kΩ/square. In contrast, an attempt to measure the electrical resistance of the silicone cured product prior to mineralization revealed that the resistance was too high to be measurable.

### [Example 4]

With the exceptions of replacing the metallic silicon filler used in Example 1 with 1,053 parts by mass of a silver filler (melting point: 962°C, average particle size: 10 µm), equivalent to 50% by volume of the entire silicone composition, and altering the heat treatment conditions so that instead of raising the temperature to 1,000°C over a ten-hour period at a rate of temperature increase of 100°C/hour and then holding the temperature at 1,000°C for one hour, the temperature was raised to 900°C over a nine-hour period at a rate of temperature increase of 100°C/hour and then held at 900°C for one hour, a heat treatment was conducted in the same manner as Example 1, yielding a circular cylindrically shaped black inorganic molded item having an outer diameter of 18 mm, a height of 91 mm, and a wall thickness of 0.9 mm. The mass loss during the heat treatment was 2.0%. Polishing a surface of the inorganic molded item with a polishing device revealed a silver-colored metallic luster. Measurement of the electrical resistance of this cylinder having a silver-colored metallic luster revealed a resistance of 0 kΩ/square.

### [Example 5]

100 parts by mass of a silicone resin comprising only MeSiO_{3/2} units as the siloxane units and also containing 5% by mass of hydroxyl groups (molecular weight: 1,000, average composition formula: Me(OH)_{0.2}SiO_{1.3}, softening point: 65°C) was dissolved in tetrahydrofuran to form a 30% by mass tetrahydrofuran solution. This solution and 234 parts by mass of a metallic silicon filler (melting point: 1410°C, average particle size: 10 µm) were placed in a planetary mixer (a registered trademark for a mixing device manufactured by Inoue Manufacturing Co., Ltd.), and were then stirred for one hour at room temperature, yielding a silicone resin composition containing 50% by volume of the metallic silicon filler.

The above curable silicone composition was poured into a metal mold having the same shape as that used in Example 1, and was then heated under a reduced pressure of 0.1 atmospheres at 200°C for one hour.

Following removal from the mold, the silicone resin cured product was subjected to a heat treatment in the same manner as Example 1, yielding a circular cylindrically shaped black inorganic molded item having an outer diameter of 18 mm, a height of 91 mm, and a wall thickness of 0.9 mm. The mass loss during the heat treatment was 5.2%. Polishing a surface of the inorganic molded item with a polishing device revealed a gray-colored metallic luster, and measurement of the specific gravity revealed a value of 1.9.

### [Example 6]

With the exception of replacing the metallic silicon filler used in Example 5 with 453 parts by mass of a titanium filler (melting point: 1660°C, average particle size: 10 µm), equivalent to 50% by volume of the entire silicone composition, a heat treatment was conducted in the same manner as Example 5, yielding a circular cylindrically shaped black inorganic molded item having an outer diameter of 18 mm, a height of 90 mm, and a wall thickness of 0.9 mm. The mass loss during the heat treatment was 2.6%. Polishing a surface of the inorganic molded item with a polishing device revealed a silver-colored metallic luster, and measurement of the specific gravity revealed a value of 3.6.

### [Example 7]

With the exception of replacing the silicone resin used in Example 5 with a silicone resin comprising approximately 60 mol% of PhSiO_{3/2} units, approximately 20 mol% of Ph₂SiO units and approximately 20 mol% of MeSiO_{3/2} units as the siloxane units, and also containing 5% by mass of hydroxyl groups (molecular weight: 1,000, average composition formula: Ph(Me)_{0.2}(OH)_{0.3}SiO_{1.1}, softening point: 92°C), a heat treatment was conducted in the same manner as Example 5, yielding a circular cylindrically shaped black inorganic molded item having an outer diameter of 18 mm, a height of 90 mm, and a wall thickness of 0.9 mm. The mass loss during the heat treatment was 7.2%. Polishing a surface of the inorganic molded item with a polishing device revealed a gray-colored metallic luster, and measurement of the specific gravity revealed a value of 1.9.

### [Comparative Example 1]

(i) 71.6% by mass of an organic compound containing epoxy groups within each molecule and represented by a formula shown below: 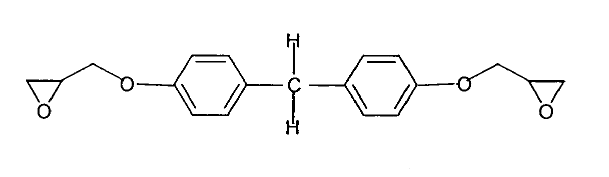
(ii) 28.4% by mass of an organic compound containing amino groups within each molecule and represented by a formula shown below: 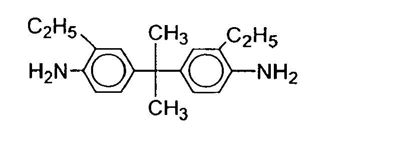
(iii) a metallic silicon filler (melting point: 1410°C, average particle size: 10 µm) in a quantity equivalent to 200% by mass relative to the components (i) and (ii).

The above components (i), (ii) and (iii) were placed in a planetary mixer (a registered trademark for a mixing device manufactured by Inoue Manufacturing Co., Ltd.), and were stirred for one hour at room temperature, yielding a curable organic composition.

The above curable organic composition was poured into a metal mold having the same shape and dimensions as that used in Example 1, and was then heated at 170°C for two hours.

Following removal from the mold, the resulting organic cured product was heated to 1,000°C, held at 1,000°C for one hour, and then cooled to room temperature under the same conditions as Example 1. A black lump was obtained, but deformation had occurred and the circular cylindrical shape was not retained. The mass loss during the heat treatment was 25.2%. Even upon polishing of a surface of the product with a polishing device, no metallic luster was observed.

### [Comparative Example 2]

With the exception of altering the heat treatment conditions by raising the temperature to 1,000°C over a ten-hour period at a rate of temperature increase of 100°C/hour and then holding the temperature at 1,000°C for one hour, a black inorganic molded item was produced in the same manner as Example 4. Although the shape of the item was a circular cylinder, a multitude of silver-colored spherical eluted sections were visible on the surface of the cylinder.

## Claims

1. A method of producing a metal-ceramic composite material having a metallic luster, the method comprising subjecting a cured product obtained by curing a curable silicone composition containing a metal filler to heating under a non-oxidizing atmosphere, at a temperature that is within a range from 400 to 1,500°C and is less than a melting point of the metal filler.

2. The method of producing a metal-ceramic composite material according to claim 1, wherein the curing is conducted after molding the curable silicone composition to a desired shape.

3. The method of producing a metal-ceramic composite material according to claim 1, wherein the curable silicone composition is an addition-curable silicone composition.

4. The method of producing a metal-ceramic composite material according to claim 3, wherein the addition-curable silicone composition comprises:
(a) an organopolysiloxane containing alkenyl groups, in which a molar ratio of the alkenyl groups relative to all silicon atoms within a molecule is within a range from 0.3 to 2.0,
(b) an organohydrogenpolysiloxane containing hydrogen atoms bonded to silicon atoms, in which a molar ratio of the hydrogen atoms relative to all silicon atoms within a molecule is within a range from 0.3 to 2.0,
(c) a platinum group metal-based catalyst, and
(d) a metal filler.

5. The method of producing a metal-ceramic composite material according to claim 1, wherein the curable silicone composition containing a metal filler is a condensation-curable silicone composition.

6. The method of producing a metal-ceramic composite material according to claim 5, wherein the condensation-curable silicone composition comprises:
(α) a silicone resin represented by an average composition formula (3) shown below:
R¹ₘR²ₙ(OR³)ₚ(OH)_{q}SiO_{(4-m-n-p-q)/2} (3)
(wherein, each R¹ represents, independently, a hydrogen atom or a monovalent hydrocarbon group other than an aryl group that includes or does not include a carbonyl group, R² represents a phenyl group, R³ represents a monovalent hydrocarbon group of 1 to 4 carbon atoms, m represents a number that satisfies: 0.1 ≤ m ≤ 2, n represents a number that satisfies: 0 ≤ n ≤ 2, p represents a number that satisfies: 0 ≤ p ≤ 1.5, and q represents a number that satisfies: 0 ≤ q ≤ 0.35, provided that m+n+p+q satisfies: 0.1 ≤ m+n+p+q ≤ 2.6),
(β) a metal filler,
(γ) optionally, a hydrolyzable silane and/or partial hydrolysis-condensation product thereof, and
(δ) optionally, a condensation reaction catalyst.

7. The method of producing a metal-ceramic composite material according to claim 6, wherein the condensation-curable silicone composition is composed essentially of only the silicone resin of component (α) and the metal filler of component (β).

8. The method of producing a metal-ceramic composite material according to claim 1, wherein the curable silicone composition contains the metal filler in a quantity that represents 20 to 80% by volume of the entire curable silicone composition.

9. The method of producing a metal-ceramic composite material according to claim 1, wherein the metal filler is formed from at least one metal selected from the group consisting of metallic silicon, titanium, nickel, iron, aluminum, magnesium, copper, silver, gold, molybdenum and tungsten.

10. A metal-ceramic composite material having a metallic luster produced using the method according to claim 1.
